# EUROPÄISCHE PATENTSCHRIFT

(11) **EP 3 054 171 B1**
(45) Veröffentlichungstag und Bekanntmachung des Hinweises auf die Patenterteilung: **16.10.2019**
(21) Anmeldenummer: 16153780.8
(22) Anmeldetag: 02.02.2016
(51) Int. Cl.: F16B 5/04, F16B 19/10

(54) **NIETVERBINDUNGSANORDNUNG SOWIE VERFAHREN ZU DESSEN HERSTELLUNG**
RIVET CONNECTING ASSEMBLY AND METHOD FOR THE PRODUCTION THEREOF
SYSTEME D'ASSEMBLAGE PAR RIVETS ET SON PROCEDE DE FABRICATION

(30) Priorität: 05.02.2015 DE 102015101642
(43) Veröffentlichungstag der Anmeldung: 10.08.2016
(60) Teilanmeldung: 19152819.9
(73) Patentinhaber: Schmidt, Heiko, 93138 Lappersdorf (DE)
(72) Erfinder: Schmidt, Heiko, 93138 Lappersdorf (DE)
(74) Vertreter: Glück Kritzenberger Patentanwälte PartGmbB

(56) Entgegenhaltungen:
- WO-A1-94/01687
- WO-A1-2008/141653
- DE-U1- 29 919 502
- DE-U1-202006 012 493
- FR-A1- 2 990 366
- GB-A- 1 222 633
- US-A1- 2002 127 080

## Beschreibung

Die Erfindung betrifft eine Nietverbindungsanordnung gemäß dem Oberbegriff des Patentanspruches 1 sowie ein zugehöriges Verfahren zu dessen Herstellung gemäß dem Oberbegriff des Patentanspruches 11.

Blindnietverfahren und zugehörige Nietverbindungsanordnungen sind hinlänglich bekannt. Dabei wird zur Herstellung einer Blindnietverbindung, beispielsweise zwischen zwei blechförmigen Werkstücken oder einem blechförmigen Werkstück und einem weiteren Werkstück zunächst eine Vorlochung in die miteinander zu verbindenden Werkstücke eingebracht. Anschließend wird in die Vorlochung der Werkstücke ein Blindnietelement eingesetzt, welches zumindest einen Niethülsenabschnitt und einen Nietflanschabschnitt aufweist. Im Blindnietelement ist ein Zugelement in Form eines Nietdornes oder Zugdornes aufgenommen, welches vorzugsweise eine Sollbruchstelle aufweist. Zur Herstellung der Nietverbindung wird das Zugelement mit einer Zugkraft beaufschlagt und damit das Zugelement aus dem Blindnietelement heraus gezogen. Das Zugelement in Form eines Nietdornes weist ein an den Niethülsenabschnitt anschließenden Nietdornkopf auf, der sich am stirnseitigen Ende des Niethülsenabschnittes abstützt. Durch Ziehen des Nietdornes aus dem Blindnietelement wird dessen Niethülsenabschnitt verformt, vorzugsweise bis zum Brechen des Nietdornelementes an einer vorgegebenen Sollbruchstelle. Der Niethülsenabschnitt bildet hierbei einen Nietbund aus, so dass die zu verbindenden Werkstücke zwischen dem Nietflanschabschnitt und dem Nietbund eingespannt sind. Der den Nietdornkopf aufweisende Teil des Nietdornes verbleibt vorzugsweise im verformten Blindnietelement und bildet die Nietverbindung aus. Mittels des Nietbundes ist das Blindnietelement insbesondere auch gegen Auspressen und/oder gegen Verdrehen im Werkstück fixiert. Nachteilig ist ein nachträgliches Lösen einer herkömmlichen Nietverbindung nur mit einem hohen Arbeitsaufwand und unter Zerstörung der Nietverbindung möglich.

Beispielsweise beschreibt auch die WO 2008/141653 A1 eine Nietverbindungsanordnung umfassend ein Nietelement und zwei mittels des Nietelementes über eine Nietverbindung miteinander verbundene Werkstücke. Das Nietelement der WO 2008/141653 A1 ist zweiteilig ausgebildet und weist einen abschnittsweise als Hohlniet ausgebildeten Nietschaftabschnitt mit einem Außengewinde und einen durch ein aufschraubbares Mutterelement gebildeten Nietflansch auf. Bei hergestellter Nietverbindung ist der Nietschaftabschnitt durch Vorlochungen in den Werkstücken geführt und zu einem Nietbund verformt, so dass die Werkstücke zwischen dem Nietbund und dem Nietflansch eingeklemmt sind. Bei dem Nietelement der WO 2008/141653 A1 handelt es sich um ein Blindnietelement mit einem im Nietschaftabschnitt aufgenommenen Zugdorn.

Auch sind Blindnietmuttern bekannt, welche nach dem Spindelhubprinzip gesetzt werden. Eine derartige Blindnietmutter weist ein Innengewinde auf, in welche ein den Zugdorn bildendes Schraubelement eingeschraubt wird. Durch das Einschrauben des Schraubelementes wird der Niethülsenabschnitt analog zum zuvor beschriebenen Blindnietelement zur Bildung eines Nietbundes verformt, der hierdurch zur Anlage am Werkstück gelangt.

Ausgehend hiervon liegt der Erfindung die Aufgabe zugrunde, eine verbesserte Nietverbindungsanordnung anzugeben, die nachträglich lösbar ist sowie einfach, schnell und kostengünstig herstellbar ist, vorzugsweise in einem Arbeitsgang im Rahmen eines automatisierten Herstellungsprozesses. Die Aufgabe wird durch eine Nietverbindungsanordnung gemäß dem Patentanspruch 1 und ein zugehöriges Verfahren zu dessen Herstellung gemäß Patentanspruch 11 gelöst.

Der wesentliche Aspekt der erfindungsgemäßen Nietverbindungsanordnung ist darin zu sehen, dass der Nietflansch über ein Hülsenelement lösbar mit dem Nietelement verbunden ist. Besonders vorteilhaft kann hierdurch die erstellte Nietverbindung nachträglich wieder gelöst werden, beispielsweise zu Reparatur- oder Wartungszwecken, ohne das eine Zerstörung der Nietverbindungsanordnung erforderlich ist. Vielmehr kann nach dem Lösen die Nietverbindungsanordnung auch wieder hergestellt werden.

Weiterhin vorteilhaft ist der Nietflansch durch ein auf das Hülsenelement aufschraubbares Mutterelement gebildet. Vorzugsweise weist aufschraubbare Mutterelement ein Innengewinde auf, welches auf das Hülsenelement aufschraubbar ist. In einer Ausführungsvariante ist das aufschraubbare Mutterelement als selbstschneidendes oder verliergesichertes Mutterelement ausgebildet.

In einer alternativen Ausführungsvariante kann das Hülsenelement eine hohlzylinderförmige Hülsenwandung mit einem Außengewinde zum Aufschrauben des Mutterelementes aufweisen. Besonders vorteilhaft ist durch die Ausbildung des Nietflansches in Form eines Mutterelementes die Verbindung schnell und problemlos lösbar und wieder herstellbar. Darüber hinaus ist über das Mutterelement auch nach der Herstellung der Nietverbindung zusätzlich noch eine Vorspannung einbringbar bzw. eine bestehende Vorspannung individuell einstellbar.

Besonders vorteilhaft kann das Nietelement durch ein Blindnietelement oder ein Blindnietmutterelement oder ein Blindnietschraubelement gebildet sein. Ein Blindnietelement weist ein integriertes Zugdornelement mit einem Zugdornkopf und einen daran anschließenden Zugdornschaft auf. Zusätzlich umfasst das Blindnietelement einen holzylinderförmigen oder hohlnietförmigen oder ringförmigen Verbindungsabschnitt, der beispielsweise einen polygonartigen, vorzugsweise hexagonalen oder runden Querschnitt aufweisen kann.

In einer weiteren vorteilhaften Ausführungsvariante weisen der Nietschaftabschnitt und der daran anschließende Verbindungsabschnitt denselben Durchmesser auf oder der Durchmesser des Verbindungsabschnittes ist größer als der Durchmesser des Nietschaftabschnittes. Zusätzlich weisen das erste Werkstück eine erste Vorlochung und das zweite Werkstück eine zweite Vorlochung auf und der Durchmesser der ersten Vorlochung ist gleich oder größer als der Durchmesser der zweiten Vorlochung ist. Besonders bevorzugt ist hierbei der Durchmesser der ersten Vorlochung an den Durchmesser des Hülsenelementes angepasst, wohingegen der Durchmesser der zweiten Vorlochung an den Durchmesser des Nietschaftabschnittes angepasst ist. Hierdurch kann auch ein direkte Nietverbindung zwischen dem Nietelement und dem zweiten Werkstück hergestellt werden, so dass die Nietverbindungsanordnung daran verlierungssicher auch nach dem Öffnen des Mutterelementes gehalten ist.

In einer vorteilhaften Weiterbildung der Erfindung ist der Querschnitt der ersten und/oder zweiten Vorlochung an die Querschnittsform des Nietelementes, insbesondere die Querschnittsform dessen Verbindungsabschnittes angepasst. Die erste und/oder zweite Vorlochung weist beispielsweise einen kreisförmigen, runden, ovalen oder polygonartigen, vorzugsweise hexagonalen Querschnitt auf. Weiterhin vorteilhaft weist das Nietelementes auf der Außenseite, vorzugsweise im Bereich des Nietschaftabschnittes eine Profilierung oder Rändelung auf.

Das Hülsenelement ist weiterhin vorteilhaft im Längsschnitt U-förmig ausgebildet und weist eine stirnseitige Durchgangsbohrung sowie eine konzentrisch zur Längsachse verlaufende Hülsenwandung auf. Bevorzugt ist hierbei der durch die Hülsenwandung eingeschlossene Innendurchmesser größer als der Durchmesser der Durchgangsbohrung gewählt.

Vorteilhaft ist mittels des Mutterelementes die Nietverbindungsanordnung mit einer Vorspannkraft beaufschlagbar, die über das Mutterelement einstellbar ist.

Ebenfalls ist Gegenstand der Erfindung ein Verfahren zur Herstellung einer wie oberhalb beschriebenen Nietverbindungsanordnung umfassend ein Nietelement, zumindest zwei zu verbindende Werkstücke, wobei das Nietelement einen zumindest abschnittsweise als Hohlniet ausgebildeten Nietschaftabschnitt und einen entlang der Längsachse des Nietelementes daran anschließenden Nietflansch aufweist. Besonders vorteilhaft wird in die zu verbindenden Werkstücke zumindest eine erste und zweite Vorlochung eingebracht und der Nietflansch über ein Hülsenelement lösbar mit dem Nietelement verbunden. Anschließend wird das derart vorbereitete Nietelement durch die zueinander fluchtenden Vorlochung zumindest abschnittsweise hindurch geführt und der Nietschaftabschnitt in einen Nietbund verformt, so dass die beiden Werkstücke zumindest zwischen dem Nietbund und dem Nietflansch eingeklemmt werden. Zum Lösen der Nietverbindungsanordnung wird das Mutterelement besonders vorteilhaft einfach nur von dem Hülsenelement abgeschraubt. Weiterhin vorteilhaft wird mittels des durch ein aufschraubbares Mutterelement gebildeten Nietflansches eine Vorspannung in die Nietverbindungsanordnung eingebracht.

Die Ausdrucke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: einen schematischen Längsschnittes durch eine nicht von der Erfindung umfasste Nietverbindungsanordnung,
- Fig. 2: einen schematischen Längsschnitt durch die Nietverbindungsanordnung gemäß Figur 1 nach der Herstellung der Nietverbindung,
- Fig. 3: einen schematischen Längsschnitt durch eine alternative Ausführungsvariante einer nicht von der Erfindung umfassten Nietverbindungsanordnung mit einem durch ein Blindnietelement gebildetes Nietelement,
- Fig. 4: einen schematischen Längsschnitt durch die Nietverbindungsanordnung gemäß Figur 3 nach der Herstellung der Nietverbindung,
- Fig. 5: einen schematischen Längsschnitt durch eine weitere alternative Ausführungsvariante einer nicht von der Erfindung umfassten Nietverbindungsanordnung mit einem durch ein gestuftes Blindnietelement gebildetes Nietelement,
- Fig. 6: einen schematischen Längsschnitt durch die Nietverbindungsanordnung gemäß Figur 5 nach der Herstellung der Nietverbindung,
- Fig. 7: einen schematischen Längsschnitt durch eine weitere alternative Ausführungsvariante einer nicht von der Erfindung umfassten Nietverbindungsanordnung mit einem durch eine Blindnietschraubelement gebildetes Nietelement,
- Fig. 8: einen schematischen Längsschnitt durch die Nietverbindungsanordnung gemäß Figur 7 nach der Herstellung der Nietverbindung,
- Fig. 9: einen schematischen Längsschnitt durch eine Ausführungsvariante der erfindungsgemäßen Nietverbindungsanordnung mit einem durch eine Blindnietelement gebildetes Nietelement und einem Hülsenelement und,
- Fig. 10: einen schematischen Längsschnitt durch die Nietverbindungsanordnung gemäß Figur 9 nach der Herstellung der Nietverbindung.

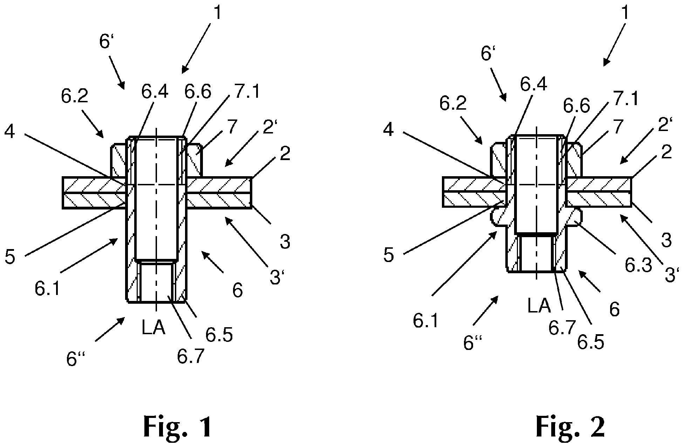

In Figur 1 ist in einer schematischen Seitenansicht ein Längsschnitt durch eine nicht von der Erfindung umfasste Nietverbindungsanordnung 1 beispielhaft dargestellt, welche zur Herstellung einer Nietverbindung zwischen zwei Werkstücken 2, 3, beispielsweise zwei blechförmigen oder blechartigen Bauteilen, insbesondere Metallbauteilen vorgesehen ist.

In den nachfolgend beschriebenen Figuren sind diese Werkstücke 2, 3 jeweils nur beispielhaft anhand zweier aneinander anliegender, vorzugsweise ebener Anlageabschnitte der Werkstücke 2, 3 dargestellt, und zwar ein erstes Anlageabschnitt 2' des ersten Werkstückes bzw. Metallbauteils 2 und ein daran anliegender zweiter Anlageabschnitt 3' des zweiten Werkstückes bzw. Metallbauteils 3. Zur Herstellung der Nietverbindungsanordnung 1 sind in die aneinander anliegenden Anlageabschnitte 2', 3' der Werkstücke 2, 3 zueinander fluchtende Vorlochungen 4, 5 eingebracht, und zwar eine erste Vorlochung 4 in das erste Werkstück bzw. Metallbauteil 2 und eine zweite Vorlochung 5 in das zweite Werkstück bzw. Metallbauteil 3, über welche die Nietverbindung zwischen den beiden Werkstücken bzw. Metallbauteilen 2, 3 hergestellt wird.

Abhängig von der jeweiligen Ausführungsvariante können die erste und zweite Vorlochung 4, 5 denselben oder einen unterschiedlichen Durchmesser und/oder dieselbe oder eine unterschiedliche Querschnittsform aufweisen, wobei die Mittenachsen der ersten und zweiten Vorlochung 4, 5 unabhängig davon jeweils zusammen fallen. Die Vorlochungen 4, 5 weisen vorzugsweise einen runden oder polygonartigen Querschnitt auf.

Die Nietverbindungsanordnung 1 erstreckt sich entlang einer Längsachse LA, welche vorzugsweise senkrecht zu den Anlageabschnitten 2', 3' verläuft und mit den Mittenachsen der Vorlochungen 4, 5 zusammenfällt. Hierzu weist die Nietverbindungsanordnung 1 zumindest ein Nietelement 6 mit einem zumindest abschnittsweise als Hohlniet ausgebildeten Nietschaftabschnitt 6.1 und einen entlang der Längsachse LA des Nietelementes 6 daran anschließenden Nietflansch 6.2 auf, der vorzugsweise im Bereich eines ersten freien Endes 6' des Nietelementes 6 angeordnet ist. Das gegenüberliegende zweite freie Ende 6" des Nietelementes 6 kann je nach Ausführungsvariante unterschiedlich ausgeführt sein wie nachfolgend noch genauer erläutert wird.

Zur Herstellung der Nietverbindung wird das Nietelement 6 zumindest mit dem Nietschaftabschnitt 6.1 durch die Vorlochungen 4, 5 hindurch geführt und stützt sich mit dem freiendseitig im Bereich des ersten freien Endes 6' angeordneten Nietflansch 6.2 auf einem der Anlageabschnitte 2', 3', im vorliegenden Ausführungsbeispiel auf dem ersten Anlageabschnitt 2' ab. Anschließend wird der Nietschaftabschnitt 6.1 des Nietelementes 6 in an sich bekannter Weise in einen Nietbund 6.3 verformt. Das Verformen des Nietschaftabschnittes 6.1 kann abhängig von der jeweiligen Ausbildung des Nietelementes 6 als Blindnietelement 6a, 6b, 6d oder als Blindnietmutterelement 6 oder als Blindnietschraubelement 6c durch unterschiedlich ausgebildete Zugelemente, beispielsweise einem Zugdornelement 8 oder einem Zugschraubenelement 9 erfolgen. Die aneinander anliegenden Anlageabschnitte 2', 3' der Werkstücke 2, 3 werden durch den beim Nieten entstehenden Nietbund 6.3 zwischen diesem und dem Nietflansch 6.2 eingeklemmt. Nachteilig ist hierbei, dass bei bekannten Nietverbindungsanordnungen der Nietflansch 6.2 einteilig bzw. einstückig mit dem Nietelement 6 ausgebildet ist oder fest mit diesem verbunden ist, d.h. nach der Herstellung der Nietverbindung ist diese lediglich durch Zerstörung wieder lösbar.

Um eine auch noch nach der Herstellung der Nietverbindung lösbare Nietverbindungsanordnung 1, 1a - 1d zu schaffen, ist der Nietflansch 6.2, 6.2a - 6.2d lösbar mit dem Nietelement 6, 6a, 6b, 6c oder über ein Hülsenelement 10 lösbar mit dem Nietelement 6d verbunden, d.h. das Nietelement 6 ist mehrteilig, vorzugsweise zumindest zweiteilig ausgebildet und weist somit zumindest ein erstes Teil, welches den Grundkörper des Nietelements 6 bildet und zumindest den abschnittsweise als Hohlniet ausgebildeten Nietschaftabschnitt 6.1 umfasst, und zumindest ein zweites Teil, welches den lösbar mit dem Nietelement 6, 6a - 6d verbindbar ist und den Nietflansch 6.2 ausbildet, auf. Der lösbare Nietflansch 6.2, 6.2a - 6.2d ist vorzugsweise durch ein Mutterelement 7, 7a - 7d gebildet, über welches insbesondere auch eine Vorspannung in die Nietverbindungsanordnung 1, 1a - 1d eingebracht werden kann, d.h. besonders vorteilhaft kann nach Herstellung der Nietverbindung auch die Vorspannkraft durch entsprechendes Lockern oder Anziehen des Mutterelementes 7, 7a - 7d eingestellt werden.

In Figur 1 und 2 ist beispielhaft eine erste Ausführungsvariante einer nicht von der vorliegenden Erfindung umfassten Nietverbindungsanordnung 1 anhand von schematischen Schnittzeichnungen dargestellt, bei der das Nietelement 6 durch ein Blindnietmutterelement gebildet ist, welches an einem ersten freien Ende 6' lösbar mit einem Mutterelement 7 verbunden ist, das den Nietflansch 6.2 bildet. Das Blindnietmutterelement 6 weist hierzu einen entlang der Längsachse LA an den Nietschaftabschnitt 6.1 anschließenden hohlzylinderförmigen Verbindungsabschnitt 6.6 auf, der zur Aufnahme des lösbar ausgebildeten Nietflansches 6.2 bzw. des Mutterelementes 7 vorgesehen ist. Das Mutterelement 7 weist hierzu in einer ersten Ausführungsvariante ein Innengewinde 7.1 auf, das im Bereich des Verbindungsabschnittes 6.6 des Blindnietmutterelementes 6 vorgesehenes Außengewinde 6.4 aufschraubbar ist. Alternativ kann das Mutterelement 7 als selbstschneidendes oder verliergesichertes Mutterelement ausgebildet sein, welches ebenfalls lösbar mit dem Verbindungsabschnittes 6.6 am ersten freien Ende 6' verbunden ist, und zwar ohne das hierzu eine spezielles Außengewinde 6.4 erforderlich ist.

Figur 1 zeigt das in die Vorlochungen 4, 5 eingeführte Blindnietmutterelement 6 mit einem am ersten freien Ende 6' bzw. am hohlzylinderförmigen Verbindungsabschnitt 6.6 lösbar befestigten Mutterelement 7, welches mit dem Innengewinde 7.1 auf dem Außengewinde 6.4 des Blindnietmutterelements 6 aufgeschraubt ist. An den Verbindungsabschnitt 6.6 des Blindnietmutterelementes 6 schließt sich vorzugsweise unmittelbar der Nietschaftabschnitt 6.1 an, an den sich wiederum entlang der Längsachse LA ein das zweite freie Ende 6" des Blindnietmutterelementes 6 bildender Mutterabschnitt 6.5 anschließt, welcher ein Innengewinde 6.7 aufweist.

Das Blindnietmutterelement 6 stützt sich nach dem Einbringen in die Vorlochungen 4, 5 mit dem Mutterelement 7 auf dem ersten Anlageabschnitt 2' des ersten Werkstücks 2 ab. Zur Herstellung der Nietverbindung wird nun ein beispielsweise durch ein Schraubelement gebildetes Zugmittel (nicht in den Figuren dargestellt) in das Blindnietmutterelement 6 bzw. das am zweiten freien Ende 6" vorgesehene Innengewinde 6.7 des Mutterabschnittes 6.5 eingeschraubt, wobei der Kopf des in den Figuren 1 und 2 nicht dargestellten Schraubelementes stirnseitig im Bereich des ersten freien Endes 6' des Nietelementes 6 anliegt und über den Schaft der Schraubelementes die beiden gegenüberliegenden freien Enden 6', 6" des Blindnietmutterelementes 6 zueinander verspannt werden, so dass bei einem weiteren Einschrauben des Schraubelementes in das Blindnietmutterelement 6 der Nietschaftabschnitt 6.1 entsprechend in den Nietbund 6.3 verformt wird, wie beispielhaft in Figur 2 dargestellt. Der Nietbund 6.3 bildet hierbei eine konzentrisch um die Längsachse umlaufenden wulstförmigen oder ringförmigen Anlageabschnitt aus.

Nach dem Verformen des Nietschaftabschnittes 6.1 in den Nietbund 6.3 sind die Werkstücke 2, 3 zwischen dem Nietbund 6.3 und dem auf dem Verbindungsabschnitt 6.6 aufgeschraubten Mutterelement 7 eingeklemmt, d.h. die Nietverbindung ist hergestellt. Im Anschluss daran wird das Schraubelement wieder aus dem Blindnietmutterelement 6, insbesondere dem Mutterabschnitt 6.5 heraus geschraubt und aus der Nietverbindungsanordnung 1 entfernt. Vorteilhaft kann diese Nietverbindungsanordnung 1 durch entsprechendes Lösen der Schraubverbindung zwischen dem Mutterelement 7 und dem Blindnietmutterelement 6 wieder gelöst werden.

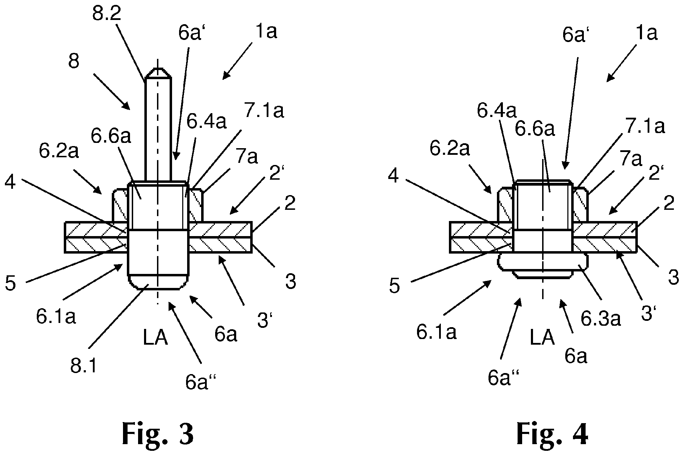

In den Figuren 3 und 4 ist eine alternative Ausführungsvariante einer nicht von der Erfindung umfassten Nietverbindungsanordnung 1a dargestellt, und zwar wiederum im offenen, d.h. noch nicht vernieteten Zustand (Figur 3) und im vernieteten Zustand (Figur 4). Das Nietelement 6 ist in dieser Ausführungsvariante als Blindnietelement 6a mit integrierten Zugdornelement 8 ausgebildet, das durch den Nietschaftabschnitt 6.1a geführt ist. Im Vergleich zum Blindnietmutterelement 6 gemäß der Figuren 1 und 2 weist das Blindnietelement 6a eine kürzere Längserstreckung entlang der Längsachse LA auf. An den Nietschaftabschnitt 6.1a schließt sich wiederum ein hohlzylinderförmiger Verbindungsabschnitt 6.6a an, der das erste freie Ende 6a' des Blindnietelementes 6a bildet. Das Zugdornelement 8 weist einen Zugdornkopf 8.1 und einen daran anschließenden länglichen Zugdornschaft 8.2, wobei der Zugdornkopf 8.1 an dem zweiten freien Ende 6a" des Blindnietelementes 6a bzw. dem Nietschaftabschnittes 6.1a anliegt und der Zugdornschaft 8.2 sich über die gesamte Längserstreckung des Blindnietelementes 6a über das erste freie Ende 6a' des Nietelementes 6a hinaus nach außen erstreckt und entlang der Längsachse LA vom ersten freien Ende 6a' des Nietelementes 6a absteht.

Im Bereich des ersten freien Endes 6a' ist der Nietflansch 6.2a des Blindnietelementes 6a durch ein Mutterelement 7a gebildet, welches lösbar mit dem Nietelement 6a verbunden ist, und zwar mit dessen Verbindungsabschnitt 6.6a. In der dargestellten Ausführungsvariante weist das Mutterelement 7a wiederum ein Innengewinde 7.1a auf, welches auf ein am Verbindungsabschnitt 6.6a des Blindnietelementes 6a vorgesehenes Außengewinde 6.4a aufgeschraubt ist. Gemäß Figur 3 ist das mit integrierten Zugdornelement 8 ausgebildete Blindnietelement 6a in die Vorlochungen 4, 5 eingebracht, so dass das Mutterelement 7a mit dem Anlageabschnitt 2' des ersten Werkstückes 2 zur Anlage kommt. Im Anschluss daran wird durch eine an sich bekannte Betätigung des Zugdornelementes 8, und zwar ein Ziehen des Zugdornschaftes 8.2 entlang der Längsachse LA der sich an den Zugdornkopf 8.1 anschließende Nietschaftabschnitt 6.1a zur Ausbildung des Nietbundes 6.3a verformt und hierdurch die gewünschte Klemmwirkung der Nietverbindungsanordnung 1a erzeugt.

Figur 4 zeigt die Nietverbindungsanordnung 1a nach Herstellung der Nietverbindung und zumindest teilweisen Entfernen des Zugdornschaftes 8.2 durch beispielsweise Brechen dessen entlang einer hierzu vorgesehenen Sollbruchlinie (nicht in den Figuren dargestellt). Auch hier kann die bestehende Nietverbindungsanordnung 1a nachträglich durch Lösen der Schraubverbindung zwischen dem Mutterelement 7a und dem Blindnietelement 6a geöffnet werden.

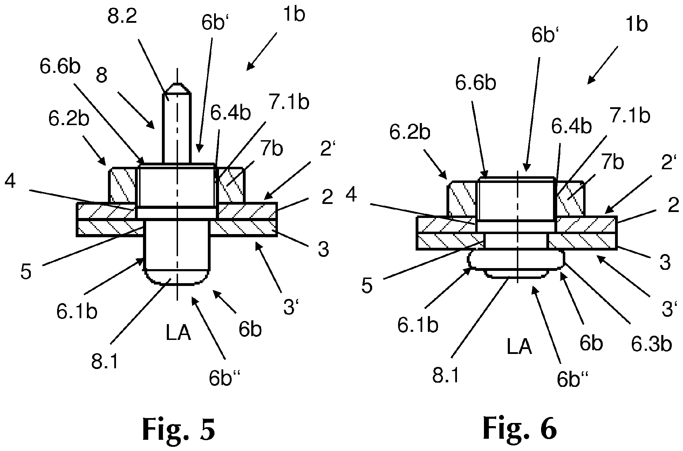

Die Figuren 5 und 6 zeigen eine weitere alternative Ausführungsvariante einer nicht von der Erfindung umfassten Nietverbindungsanordnung 1b, bei der das Nietelement 6 als Blindnietelement 6b mit integrierten Zugdornelement 8 ausgebildet ist, wobei das Blindnietelement 6b wiederum zumindest einen Nietschaftabschnitt 6.1b und einen daran entlang der Längsachse LA anschließenden hohlzylinderförmigen Verbindungsabschnitt 6.6b aufweist. Der hohlzylinderförmige Verbindungsabschnitt 6.6b weist im Vergleich zum Nietschaftabschnitt 6.1b einen größeren Durchmesser auf, so dass ein gestufter Übergang zwischen dem Nietschaftabschnitt 6.1b und dem Verbindungsabschnitt 6.6b entsteht. Der Nietschaftabschnitt 6.1b als auch der Verbindungsabschnitt 6.6b sind vorzugsweise als Hohlnietabschnitte ausgebildet. Der Verbindungsabschnitt 6.6b weist ein Außengewinde 6.4b auf, auf das das den Nietflansch 6.2b bildende Mutterelement 7b aufschraubbar ist.

Vorteilhaft ist die erste Vorlochung 4 zur Aufnahme des Verbindungsabschnittes 6.6b ausgebildet, d.h. deren Durchmesser entspricht mindestens dem Durchmesser des Verbindungsabschnittes 6.6b. Der Durchmesser der zweiten Vorlochung 5 ist an den Durchmesser des Nietschaftabschnittes 6.1b angepasst und somit kleiner als der Durchmesser der ersten Vorlochung 4 gewählt. Damit bildet sich zwischen den zueinander fluchtenden Vorlochungen 4,5 ein gestufter Durchgangsbereich aus, der im Wesentlichen dem gestuften Übergang zwischen dem Nietschaftabschnitt 6.1b und dem Verbindungsabschnitt 6.6b entspricht. Das Blindnietelement 6b liegt somit mit dem sich ausbildenden ringförmigen Anlageabschnitt des Verbindungsabschnittes 6.6b auf dem zweiten Werkstück 3 bzw. dessen Anlageabschnitt 3' auf und stützt sich dort ab. Der anschließende Nietschaftabschnittes 6.1b erstreckt sich durch die zweite Vorlochung 5 und steht wie bereits in den Figur 4 und 5 gezeigt von der Unterseite des zweiten Werkstückes 3 bzw. Anlageabschnittes 3' entlang der Längsachse LA nach außen ab.

Am ersten freien Ende 6b' des Blindnietelementes 6b ist der Nietflansch 6.2b wiederum durch ein Mutterelement 7b gebildet, welches lösbar mit dem Verbindungsabschnitt 6.6b verbunden ist. In der dargestellten Ausführungsvariante weist das Mutterelement 7b wiederum ein Innengewinde 7.1b auf, welches auf ein am Verbindungsabschnittes 6.6b des Blindnietelementes 6b vorgesehenes Außengewinde 6.4b aufgeschraubt ist.

Gemäß Figur 5 ist das Blindnietelement 6b in die beiden Vorlochungen 4, 5 in der zuvor beschriebenen Weise eingebracht, so dass das Mutterelement 7b mit dem Anlageabschnitt 2' des ersten Werkstückes 2 zur Anlage kommt. Durch eine an sich bekannte Betätigung des Zugdornelements 8, und zwar ein Ziehen des Zugdornschaftes 8.2 entlang der Längsachse LA der sich an den Zugdornkopf 8.1 anschließende Nietschaftabschnitt 6.1b zur Ausbildung des Nietbundes 6.3b verformt und hierdurch eine "doppelte" Klemmwirkung erzeugt, und zwar wird zum einen der zweite Anlageabschnitt 3' des zweiten Werkstückes 3 zwischen dem ringförmigen Anlageabschnitt des Verbindungsabschnittes 6.6b und des sich ausbildenden Nietbundes 6.3b eingeklemmt und zum anderen der erste Anlageabschnitt 2' des ersten Werkstückes 2 zwischen dem Nietbund 6.3b und dem Mutterelement 7b eingeklemmt. Besonders vorteilhaft kann bei dieser alternativen Nietverbindungsanordnung 1b die Nietverbindung zwischen den Werkstücken 2, 3 durch Abschrauben des Mutterelementes 7b gelöst werden, wobei das Blindnietelement 6b aufgrund der weiterhin bestehenden Nietverbindung mit dem zweiten Werkstück 3 daran verlierungssicher gehalten ist.

In Figur 6 ist die Nietverbindungsanordnung 1b gemäß Figur 5 nach Herstellung der Nietverbindung gezeigt, und zwar nach einem zumindest teilweisen Entfernen des Zugdornschaftes 8.2.

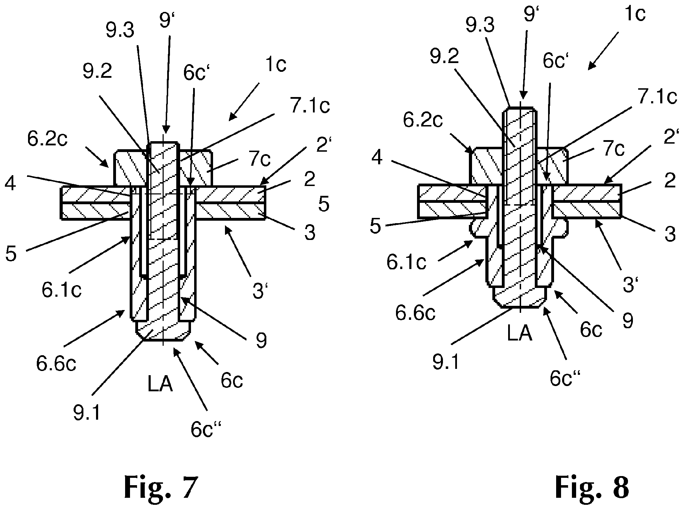

Desweiteren ist in den Figuren 7 und 8 eine weitere Ausführungsvariante einer nicht von der Erfindung umfassten Nietverbindungsanordnung 1c dargestellt, bei der das Nietelement 6 durch eine Blindnietschraube 6c gebildet ist. Die Blindnietschraube 6c weist ein erstes und zweites freies Ende 6c', 6c" auf und erstreckt sich entlang der Längsachse LA. An das erste freie Ende 6c' schließt sich der Nietschaftabschnitt 6.1c an, dem ein eine Durchgangsbohrung aufweisender und damit hülsenartig ausgebildeter Verbindungsabschnitt 6.6c folgt, der das zweite freie Ende 6c" der Blindnietschraube 6c bildet. Durch den Verbindungsabschnitt 6.6c und den Nietschaftabschnitt 6.1c ist ein Zugschraubelement 9 mit einem Zugschraubenkopf 9.1 und einen daran anschließenden Zugschraubenschaft 9.2 geführt, die zumindest an ihrem vom Zugschraubenkopf 9.1 gegenüberliegenden freien Ende 9' des Zugschraubenschaftes 9.2 ein Außengewinde 9.3 aufweist. Das Außengewinde 9.3 ist zur Aufnahme eines Mutterelementes 7c ausgebildet, welches den Nietflansch 6.2c der Nietverbindungsanordnung 1c bildet.

Vor der Montage der Blindnietschraube 6c wird das Mutterelement 7c auf das freie Ende 9' des Zugschraubenschaftes 9.2 aufgeschraubt, und zwar bis dieses an dem ersten freien Ende 6c' der Blindnietschraube 6c anliegt. Die derartig vorbereitete Blindnietschraube 6c wird in durch die beiden Vorlochungen 4,5 in den Werkstücken 2,3 geführt bis das Mutterelement 7c zur Anlage mit dem ersten Anlageabschnitt 2' des ersten Werkstückes 2 kommt. Figur 7 zeigt beispielhaft die derart in die Vorlochungen 4,5 eingeführte Blindnietschraube 6c.

Zur Herstellung der Nietverbindung wird nun das Zugschraubelement 9 um die Längsachse LA gedreht und damit das erste und zweite freie Ende 6c', 6c" der Blindnietschraube 6c gegeneinander verspannt, so dass der Nietschaftabschnitt 6.1c in den Nietbund 6.3 verformt wird, wie in Figur 8 dargestellt. Die beiden Werkstücke 2, 3 sind nun zwischen dem entstehenden Nietbund 6.3 der Blindnietschraube 6c und dem Mutterelement 7c verklemmt. Die hergestellte Nietverbindung kann durch Abschrauben des Mutterelemente 7c von der Schraube 9 wieder gelöst werden. Auch kann durch entsprechen Anziehen oder Lösen des Mutterelementes 7c eine Vorspannung in die Nietverbindungsanordnung 1c eingebracht werden.

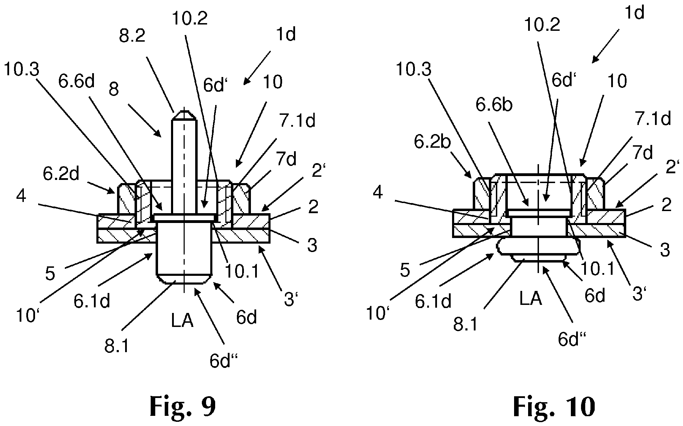

Schließlich zeigen die Figuren 9 und 10 noch eine Ausführungsvariante einer erfindungsgemäßen Nietverbindungsanordnung 1d, bei der das Nietelement 6 in Form eines Blindnietelementes 6d mit integrierten Zugdornelement 8 ausgebildet ist, wobei an den Zugdornkopf 8.1 sich der Nietschaftabschnitt 6.1d anschließt, dem ein im Querschnitt ringförmiger Verbindungsabschnitt 6.6d folgt, dessen Durchmesser größer als der Durchmesser des Nietschaftabschnitt 6.1d ist. Der Zugdornschaft 8.2 erstreckt sich entlang der Längsachse LA über den ringförmigen Verbindungsabschnitt 6.6d hinaus und steht somit von diesen entlang der Längsachse LA nach außen ab. Das Blindnietelement 6d weist wiederum zwei gegenüberliegende freie Enden 6d', 6d" auf, wobei ein erstes Ende 6d' sich an den Zugdornkopf 8.1 anschließt und das zweite freie Ende 6d" durch den ringförmigen Verbindungsabschnitt 6.6d gebildet ist.

Ferner ist eine im Längsschnitt U-förmig ausgebildetes Hülsenelement 10 vorgesehen, welches eine stirnseitige Durchgangsbohrung 10.1 und eine zylinderförmige Hülsenwandung 10.2 mit einem Außengewinde 10.3 aufweist. Die an der Stirnseite 10' des Hülsenelementes 10 vorgesehene Durchgangsbohrung 10.1 des Hülsenelementes 10 ist derart bemessen, dass der Nietschaftabschnitt 6.1d hindurch geführt werden kann, der Verbindungsabschnitt 6.6d aufgrund seines vergrößerten Durchmessers jedoch zur Anlage innerhalb der zylinderförmigen Hülsenwandung 10.2 gelangt.

Wie aus Figur 9 ersichtlich wird das Hülsenelement 10 mit der Hülsenwandung 10.2 voraus vom zweiten freien Ende 6d" des Blindnietelement 6d her auf den Nietschaftabschnitt 6.1d gesteckt bis dieser zur Anlage mit dem ringförmigen Anlageabschnitt 6.6d des Blindnietelementes 6d gelangt. Die zylinderförmige Hülsenwandung 10.2 umgibt die Längsachse LA konzentrisch und erstreckt sich zumindest abschnittsweise entlang des Zugdornschaftes 8.2. Auf das Außengewinde 10.3 der zylinderförmigen Hülsenwandung 10.2 ist ein den Nietflansch 6.2d der Nietverbindungsanordnung 9d bildendes Mutterelement 7d aufgeschraubt.

Um eine verlierungssichere Anbindung des Hülsenelementes 10 am zweiten Werkstück 3 zu gewährleisten weisen analog zu der Ausführungsvariante gemäß der Figuren 5 und 6 die erste und zweite Vorlochung 4, 5 unterschiedliche Durchmesser auf, und zwar ist der Durchmesser der ersten Vorlochung 4 größer als der Durchmesser der zweiten Vorlochung 5. Damit ergibt sich wiederum eine gestuft ausgebildete Durchführung, so dass die die Durchgangsbohrung 10.1 aufweisende ringförmige Stirnseite 10' des Hülsenelementes 10 zur Anlage an dem durch die erste Durchgangsbohrung 4 freigegebenen zweiten Anlageabschnitt 3' des zweiten Werkstückes 3 gelangt. Damit stützt sich die ringförmige Stirnseite 10' des Hülsenelementes 10 auf dem zweiten Werkstück 3 ab, wie in Figur 9 und 10 dargestellt.

Durch eine an sich bekannte Betätigung des Zugdornelements 8, und zwar ein Ziehen des Zugdornschaftes 8.2 entlang der Längsachse LA wird der sich an den Zugdornkopf 8.1 anschließende Nietschaftabschnitt 6.1d zur Ausbildung des Nietbundes 6.3d verformt und hierdurch wiederum eine "doppelte" Klemmwirkung erzeugt. Der zweite Anlageabschnitt 3' des zweiten Werkstückes 3 wird zwischen der ringförmigen Stirnseite 10' des Hülsenelementes 10 und dem sich ausbildenden Nietbund 6.3d und der erste Anlageabschnitt 2' des ersten Werkstückes 2 zwischen dem Nietbund 6.3d und dem Mutterelement 7d eingeklemmt. Besonders vorteilhaft kann bei dieser weiteren alternativen Nietverbindungsanordnung 1d die Nietverbindung zwischen den Werkstücken 2, 3 durch Abschrauben des Mutterelementes 7d gelöst werden, wobei das Blindnietelement 6d aufgrund der durch das Hülsenelement 10 weiterhin bestehenden Klemmverbindung verlierungssicher am zweiten Werkstück 3 gehalten ist.

In Figur 10 ist die Nietverbindungsanordnung 1d gemäß Figur 9 nach Herstellung der Nietverbindung gezeigt, und zwar nach einem zumindest teilweisen Entfernen des Zugdornschaftes 8.2.

Auch kann der Verbindungsabschnitt 6.6, 6.6a - 6.6c des jeweiligen Nietelementes 6, 6a, 6b, 6c oder das Hülsenelement 10 zumindest im Verbindungsbereich mit den Werkstücken 2, 3 einen polygonartigen, vorzugsweise hexagonalen Querschnitt aufweisen, so dass eine verdrehungssichere Aufnahme dessen in den Vorlochungen 4, 5 gewährleistet ist.

Auch kann der Querschnitt der ersten und/oder zweiten Vorlochung 4, 5 an die Querschnittsform des jeweiligen Nietelementes 6, 6a -6d, insbesondere die Querschnittsform dessen Verbindungsabschnittes 6.6a, 6.6b, 6.6d angepasst sein. Beispielsweise kann die erste und/oder zweite Vorlochung 4, 5 einen kreisförmigen, runden, ovalen oder polygonartigen, vorzugsweise hexagonalen Querschnitt aufweisen.

In einer nicht in den Figuren dargestellten Ausführungsvariante ist das jeweilige Nietelementes 6, 6a -6d auf seiner Außenseite, und zwar vorzugsweise im Bereich des Nietschaftabschnittes 6.1, 6.1a- 6.1d mit einer Profilierung oder Rändelung versehen.

Bei einem Verfahren zur Herstellung einer Nietverbindungsanordnung 1 bis 1d werden zunächst zueinander fluchtende Vorlochungen 4, 5 in die miteinander zu verbindenden Werkstücke 2, 3 eingebracht. Anschließend wird das jeweilige Nietelement 6, 6a, 6b, 6c bzw. das Hülsenelement 10 mit dem den Nietflansch 6.2, 6.2a - 6.2d bildenden Mutterelement 7, 7a - 7d lösbar verbunden und derart vorbereitet in die Vorlochungen eingebracht, und zwar bis das lösbar am Nietelement 6, 6a, 6b, 6c bzw. Hülsenelement 10 vorgesehene Mutterelement 7, 7a - 7d in Anlage mit einem der Werkstücke 2, 3 gelangt. Dann wird die Nietverbindung durch Verformen des jeweiligen Nietschaftabschnittes 6.1, 6.1a - 6.1d mittels Betätigung des Zugmittels, insbesondere des Zugdornelementes 8 oder eines entsprechenden Zugdornschraubelements 9 hergestellt. Vorteilhaft kann die Erstellung der lösbaren Nietverbindung in einem Arbeitsgang erfolgen und zusätzlich eine vordefinierte Vorspannung in die Nietverbindungsanordnung eingebracht werden. Dies ist besonders im Bereich der industriellen Vormontage oder Endmontage von Metallbauteilen 2, 3 von besonderem Vorteil.

Die Erfindung wurde voranstehend an Ausführungsbeispielen beschrieben. Es versteht sich, dass zahlreiche Änderungen sowie Abwandlungen möglich sind.

## Patentansprüche

1. Nietverbindungsanordnung (1) umfassend ein Nietelement (6, 6a - 6d) und zumindest zwei mittels des Nietelementes (6, 6a - 6d) über eine Nietverbindung verbundene Werkstücke (2, 3), wobei das Nietelement (6, 6a - 6d) wenigstens zweiteilig ausgebildet ist und zumindest einen abschnittsweise als Hohlniet ausgebildeten Nietschaftabschnitt (6.1, 6.1a- 6.1d) und einen entlang der Längsachse (LA) des Nietelementes (6, 6a - 6d) daran anschließenden und durch ein Mutterelement (7, 7a - 7d) gebildeten Nietflansch (6.2, 6.2a - 6.2d) aufweist, wobei bei hergestellter Nietverbindung der Nietschaftabschnitt (6.1, 6.1a- 6.1d) zumindest abschnittsweise durch zwei Vorlochungen (4, 5) in den Werkstücken (2, 3) hindurch geführt und in einen Nietbund (6.3, 6.3a - 6.3d) verformt ist und die beiden Werkstücke (2, 3) zwischen dem Nietbund (6.3, 6.3a - 6.3d) und dem Nietflansch (6.2, 6.2a - 6.2d) eingeklemmt sind, **dadurch gekennzeichnet, dass** das den Nietflansch (6.2, 6.2a - 6.2d) bildende Mutterelement (7, 7a - 7d) über ein Hülsenelement (10) lösbar mit dem Nietelement (6) verbunden ist.

2. Nietverbindungsanordnung nach Anspruch 1, **dadurch gekennzeichnet, dass** das aufschraubbare Mutterelement (7, 7a - 7d) ein Innengewinde (7.1) aufweist, welches auf das Hülsenelement (10) aufschraubbar ist, oder dass das aufschraubbare Mutterelement (7, 7a - 7d) als selbstschneidendes oder verliergesichertes Mutterelement ausgebildet ist.

3. Nietverbindungsanordnung nach Anspruch 1 oder 2, **dadurch gekennzeichnet, dass** das Hülsenelement (10) im Längsschnitt U-förmig ausgebildet ist und eine stirnseitige Durchgangsbohrung (10.1) sowie eine konzentrisch zur Längsachse (LA) verlaufende hohlzylinderförmige Hülsenwandung (10.2) mit einem Außengewinde (10.3) zum Aufschrauben des Mutterelementes (7d) aufweist.

4. Nietverbindungsanordnung nach einem der Ansprüche 1 bis 3, **dadurch gekennzeichnet, dass** das Nietelement (6) durch ein Blindnietelement (6a, 6b, 6d) gebildet ist und einen integrierten Zugdorn (8) mit einem Zugdornkopf (8.1) und einen daran anschließenden Zugdornschaft (8.2) aufweist.

5. Nietverbindungsanordnung nach Anspruch 4, **dadurch gekennzeichnet, dass** das Blindnietelement (6b, 6d) einen ringförmigen Verbindungsabschnitt (6.6d) umfasst, wobei der ringförmige Verbindungsabschnitt (6.6d) einen größeren Durchmesser als der Nietschaftabschnitt (6.1d) aufweist und dazu ausgebildet ist, innerhalb der Hülsenwandung (10.2) zur Anlage zu gelangen.

6. Nietverbindungsanordnung nach einem der vorhergehenden Ansprüche, **dadurch gekennzeichnet, dass** das erste Werkstück (2) eine erste Vorlochung (4) und das zweite Werkstück (3) eine zweite Vorlochung (5) aufweist und dass der Durchmesser der ersten Vorlochung (4) gleich oder größer als der Durchmesser der zweiten Vorlochung (5) ist.

7. Nietverbindungsanordnung nach Anspruch 6, **dadurch gekennzeichnet, dass** der Durchmesser der ersten Vorlochung (4) an den Durchmesser des Hülsenelementes (10) angepasst ist.

8. Nietverbindungsanordnung nach Anspruch 6 oder 7, **dadurch gekennzeichnet, dass** der Durchmesser der zweiten Vorlochung (5) an den Durchmesser des Nietschaftabschnittes (6.1a, 6.1b, 6.1d) angepasst ist.

9. Nietverbindungsanordnung nach einem der Ansprüche 6 bis 8, **dadurch gekennzeichnet, dass** die erste und/oder zweite Vorlochung (4, 5) einen kreisförmigen, runden, ovalen oder polygonartigen, vorzugsweise hexagonalen Querschnitt aufweist und/oder dass das Nietelement (6, 6a -6d) auf der Außenseite vorzugsweise im Bereich des Nietschaftabschnittes (6.1, 6.1a-6.1d) eine Profilierung oder Rändelung aufweist.

10. Nietverbindungsanordnung nach einem der vorhergehenden Ansprüche, **dadurch gekennzeichnet, dass** mittels des Mutterelementes (7, 7a - 7d) die Nietverbindungsanordnung (1, 1a - 1d) mit einer über das Mutterelement (7, 7a - 7d) einstellbaren Vorspannkraft beaufschlagbar ist.

11. Verfahren zur Herstellung einer Nietverbindungsanordnung nach Anspruch 1 umfassend ein Nietelement (6, 6a - 6d) und zumindest zwei zu verbindende Werkstücke (2, 3), wobei das Nietelement (6, 6a - 6d) einen zumindest abschnittsweise als Hohlniet ausgebildeten Nietschaftabschnitt (6.1, 6.1a-6.1d) und einen entlang der Längsachse (LA) des Nietelementes (6, 6a - 6d) daran anschließenden und durch ein Mutterelement (7 -7d) gebildeten Nietflansch (6.2, 6.2a - 6.2d) aufweist, wobei in die zu verbindenden Werkstücke (2, 3) zumindest eine erste und zweite Vorlochung (4, 5) eingebracht wird, wobei das den Nietflansch (6.2, 6.2a - 6.2d) bildende Mutterelement (7-7d) über ein Hülsenelement (10) lösbar mit dem Nietelement (6) verbunden wird und anschließend der Nietschaftabschnitt (6.1, 6.1a - 6.1d) durch die zueinander fluchtenden Vorlochungen (4, 5) zumindest abschnittsweise hindurch geführt wird, wobei der Nietschaftabschnitt (6.1, 6.1a - 6.1d) in einen Nietbund (6.3, 6.3a - 6.3d) verformt wird und die beiden Werkstücke (2, 3) zumindest zwischen dem Nietbund (6.3, 6.3a - 6.3d) und dem Nietflansch (6.2, 6.2a - 6.2d) eingeklemmt werden.

12. Verfahren nach Anspruch 11, **dadurch gekennzeichnet, dass** mittels des durch ein aufschraubbares Mutterelement (7, 7a - 7d) gebildeten Nietflansch (6.2, 6.2a - 6.2d) eine Vorspannung in die Nietverbindungsanordnung (1, 1a - 1d) eingebracht wird und/oder dass zum Lösen der Nietverbindungsanordnung (1, 1a - 1d) das Mutterelement (7, 7a - 7d) von dem Hülsenelement (10) abgeschraubt wird.

## Claims

1. A rivet connection arrangement (1) comprising a rivet element (6, 6a - 6d) and at least two work pieces (2, 3) connected by means of the rivet element (6, 6a - 6d) via a rivet connection, wherein the rivet element (6, 6a - 6d) is designed to be at least in two parts and has at least one rivet shank section (6.1, 6.1a - 6.1d) which is designed in sections as a hollow rivet and one rivet flange (6.2, 6.2a - 6.2d) adjoining thereto along the longitudinal axis (LA) of the rivet element (6, 6a - 6d), which rivet flange is formed by a nut element (7, 7a - 7d), wherein in the established rivet connection the rivet shank section (6.1, 6.1a - 6.1d) is led through two perforations (4, 5) in the work pieces (2, 3) at least in sections and is deformed into a rivet collar (6.3, 6.3a - 6.3d) and the two work pieces (2, 3) are clamped between the rivet collar (6.3, 6.3a - 6.3d) and the rivet flange (6.2, 6.2a - 6.2d), **characterized in that,** the nut element (7, 7a - 7d) forming the rivet flange (6.2, 6.2a - 6.2d) is detachably connected to the rivet element (6) via a sleeve member (10).

2. Rivet connection arrangement according to claim 1, **characterized in that**, the nut element (7, 7a - 7d) which can be screwed on comprises an internal thread (7.1), which can be screwed onto the sleeve member (10), or that the nut element (7, 7a - 7d) which can be screwed on is designed as a self-tapping or captively held nut element.

3. Rivet connection arrangement according to claim 1 or 2, **characterized in that**, the sleeve member (10) is designed in a U shape in the longitudinal section and has a through bore (10.1) on the front side as well as a sleeve wall (10.2) in the form of a hollow cylinder, said sleeve wall running concentrically with respect to the longitudinal axis (LA), with an external thread (10.3) for screwing on the nut element (7d).

4. Rivet connection arrangement according to one of claims 1 to 3, **characterized in that**, the rivet element (6) is formed by a blind rivet element (6a, 6b, 6d) and has an integrated tension mandrel (8) with a tension mandrel head (8.1) and a tension mandrel shaft (8.2) adjoning thereto.

5. Rivet connection arrangement according to claim 4, **characterized in that**, the blind rivet element (6b, 6d) comprises a ring-shaped connecting portion (6.6d), wherein the ring-shaped connecting portion (6.6d) has a larger diameter than the rivet shank section (6.1d) and is designed for abutment within the sleeve wall (10.2).

6. Rivet connection arrangement according to one of the preceding claims, **characterized in that**, the first work piece (2) has a first perforation (4) and the second work piece (3) has a second perforation (5) and that the diameter of the first perforation (4) is the same as or larger than the diameter of the second perforation (5).

7. Rivet connection arrangement according to claim 6, **characterized in that**, the diameter of the first perforation (4) is adjusted to the diameter of the sleeve member (10).

8. Rivet connection arrangement according to claim 6 or 7, **characterized in that**, the diameter of the second perforation (5) is adjusted to the diameter of the rivet shank section (6.1a, 6.1b, 6.1d).

9. Rivet connection arrangement according to one of claims 6 to 8, **characterized in that**, the first and/or second perforation (4, 5) has a circular, round, oval or polygonal, preferably hexagonal, cross section and/or that the rivet element (6, 6a - 6d) has a profiling or knurling on the outer side, preferably in the region of the rivet shank section (6.1, 6.1a - 6.1d).

10. Rivet connection arrangement according to one of the preceding claims, **characterized in that**, a prestressing force, that can be set by the nut element (7, 7a - 7d), can be applied to the rivet connection arrangement (1, 1a - 1d) by means of the nut element (7, 7a - 7d).

11. Method for manufacturing a rivet connection arrangement according to Claim 1 comprising a rivet element (6, 6a - 6d) and at least two work pieces (2, 3) to be connected, wherein the rivet element (6, 6a - 6d) has a rivet shank section (6.1, 6.1a - 6.1d) which is designed at least in sections as a hollow rivet and one rivet flange (6.2, 6.2a - 6.2d) adjoining thereto along the longitudinal axis (LA) of the rivet element (6, 6a - 6d) which rivet flange is formed by a nut element (7 - 7d), wherein at least a first and second perforation (4, 5) are introduced into the work pieces (2, 3) to be connected, wherein the nut element (7 - 7d) forming the rivet flange (6.2, 6.2a - 6.2d) is detachably connected to the rivet element (6) via a sleeve member (10) and subsequently the rivet shank section (6.1, 6.1a - 6.1d) is led, at least in sections, through the perforations (4, 5) which are aligned to one another, wherein the rivet shank section (6.1, 6.1a - 6.1d) is deformed into a rivet collar (6.3, 6.3a - 6.3d) and the two work pieces (2, 3) are clamped at least between the rivet collar (6.3, 6.3a - 6.3d) and the rivet flange (6.2, 6.2a - 6.2d).

12. Method according to claim 11, **characterized in that**, a prestress is introduced into the rivet connection arrangement (1, 1a - 1d) by means of the rivet flange (6.2, 6.2a - 6.2d) formed by a nut element (7, 7a - 7d) that can be screwed on, and/or that the nut element (7, 7a - 7d) is unscrewed from the sleeve member (10) to detach the rivet connection arrangement (1, 1a - 1d).

## Revendications

1. Système d'assemblage riveté (1) comprenant un élément de rivetage (6, 6a - 6d) et au moins deux pièces (2, 3) reliées au moyen de l'élément de rivetage (6, 6a - 6d) par un assemblage riveté, dans lequel l'élément de rivetage (6, 6a - 6d) est au moins constitué en deux parties et comporte au moins une section de tige de rivet (6.1, 6.1a - 6.1d) constituée par section sous la forme d'un rivet creux et d'une bride de rivetage (6.2, 6.2a - 6.2d) s'y raccordant le long de l'axe longitudinal (LA) de l'élément de rivetage (6, 6a - 6d) et formée par un élément d'écrou (7, 7a - 7d), dans lequel dans l'assemblage riveté réalisé, la section de tige de rivet (6.1, 6.1a - 6.1d) est guidée au moins par section à travers deux perforations préliminaires (4, 5) dans les pièces (2, 3) et est déformée en un collet de rivetage (6.3, 6.3a - 6.3d) et les deux pièces (2, 3) sont serrées entre le collet de rivetage (6.3, 6.3a - 6.3d) et la bride de rivetage (6.2, 6.2a - 6.2d), **caractérisé en ce que** l'élément d'écrou (7, 7a - 7d) formant la bride de rivetage (6.2, 6.2a - 6.2d) est relié de façon amovible par un élément de manchon (10) à l'élément de rivetage (6).

2. Système d'assemblage riveté selon la revendication 1, **caractérisé en ce que** l'élément d'écrou vissable (7, 7a - 7d) comporte un filetage intérieur (7.1), lequel peut être vissé sur l'élément de manchon (10) ou **en ce que** l'élément d'écrou vissable (7, 7a - 7d) est constitué comme élément d'écrou autotaraudant ou imperdable.

3. Système d'assemblage riveté selon la revendication 1 ou 2, **caractérisé en ce que** l'élément de manchon (10) est constitué en forme de U en coupe longitudinale et comporte un trou de passage frontal (10.1) ainsi qu'une paroi de manchon (10.2) de forme cylindrique passant de façon concentrique à l'axe longitudinal (LA) avec un filetage extérieur (10.3) pour visser l'élément d'écrou (7d).

4. Système d'assemblage riveté selon l'une quelconque des revendications 1 à 3, **caractérisé en ce que** l'élément de rivetage (6) est formé par un élément de rivetage aveugle (6a, 6b, 6d) et comporte une broche de traction (8) intégrée avec une tête de broche de traction (8.1) et une tige de broche de traction (8.2) s'y raccordant.

5. Système d'assemblage riveté selon la revendication 4, **caractérisé en ce que** l'élément de rivetage aveugle (6b, 6d) comprend une section d'assemblage annulaire (6.6d), dans lequel la section d'assemblage annulaire (6.6d) comporte un diamètre plus grand que la section de tige de rivet (6.1d) et est constituée à cet effet pour parvenir en appui à l'intérieur de la paroi de manchon (10.2).

6. Système d'assemblage riveté selon l'une quelconque des revendications précédentes, **caractérisé en ce que** la première pièce (2) comporte une première perforation préliminaire (4) et la deuxième pièce (3) une deuxième perforation préliminaire (5) et **en ce que** le diamètre de la première perforation préliminaire (4) est identique ou plus grand que le diamètre de la deuxième perforation préliminaire (5).

7. Système d'assemblage riveté selon la revendication 6, **caractérisé en ce que** le diamètre de la première perforation préliminaire (4) est adapté au diamètre de l'élément de manchon (10).

8. Système d'assemblage riveté selon la revendication 6 ou 7, **caractérisé en ce que** le diamètre de la deuxième perforation préliminaire (5) est adapté au diamètre de la section de tige de rivet (6.1a, 6.1b, 6.1d).

9. Système d'assemblage riveté selon l'une quelconque des revendications 6 à 8, **caractérisé en ce que** la première et/ou la deuxième perforation préliminaire (4, 5) comporte une section transversale circulaire, ronde, ovale ou polygonale, de préférence hexagonale et/ou **en ce que** l'élément de rivetage (6, 6a - 6d) comporte sur la face extérieure de préférence dans la zone de la section de tige de rivet (6.1, 6.1a - 6.1d) un profilage ou un moletage.

10. Système d'assemblage riveté selon l'une quelconque des revendications précédentes, **caractérisé en ce que** le système d'assemblage riveté (1, 1a - 1d) peut être sollicité au moyen de l'élément d'écrou (7, 7a - 7d) avec une force de précontrainte réglable par l'élément d'écrou (7, 7a - 7d).

11. Procédé de fabrication d'un système d'assemblage riveté selon la revendication 1 comprenant un élément de rivetage (6, 6a - 6d) et au moins deux pièces (2, 3) à relier, dans lequel l'élément de rivetage (6, 6a - 6d) comporte une section de tige de rivet (6.1, 6.1a - 6.1d) constituée au moins par section sous la forme d'un rivet creux et par une bride de rivetage (6.2, 6.2a - 6.2d) s'y raccordant le long de l'axe longitudinal (LA) de l'élément de rivetage (6, 6a - 6d) et formée par un élément d'écrou (7, 7a - 7d), dans lequel dans les pièces (2, 3) à relier au moins une première et une deuxième perforations préliminaires (4, 5) sont aménagées, dans lequel l'élément d'écrou (7 - 7d) formant la bride de rivetage (6.2, 6.2a - 6.2d) est relié de façon amovible à l'élément de rivetage (6) par un élément de manchon (10) et la section de tige de rivet (6.1, 6.1a - 6.1d) est ensuite guidée au moins par section à travers les perforations préliminaires (4, 5) alignées l'une par rapport à l'autre, dans lequel la section de tige de rivet (6.1, 6.1a - 6.1d) est déformée en un collet de rivetage (6.3, 6.3a - 6.3d) et les deux pièces (2, 3) sont serrées au moins entre le collet de rivetage (6.3, 6.3a - 6.3d) et la bride de rivetage (6.2, 6.2a - 6.2d).

12. Procédé selon la revendication 11, **caractérisé en ce qu'**une précontrainte est instaurée dans le système d'assemblage riveté (1, 1a - 1d) au moyen de la bride de rivetage (6.2, 6.2a - 6.2d) formée par un élément d'écrou vissable (7, 7a-7d) et/ou **en ce que** l'élément d'écrou (7, 7a - 7d) est dévissé de l'élément de manchon (10) pour desserrer le système d'assemblage riveté (1, 1a - 1d).
